# EUROPEAN PATENT APPLICATION

(11) **EP 3 800 301 A1**
(43) Date of publication of application: **07.04.2021**
(21) Application number: 20020445.1
(22) Date of filing: 01.10.2020
(51) Int. Cl.: E03F 1/00, E03F 5/10, E03F 7/00

(54) **AN ARRANGEMENT AND METHOD FOR OPTIMIZING INFILTRATION AND DISCHARGE OF RUNOFF WATER**

(30) Priority: 01.10.2019 GB 201914168
(71) Applicant: Stormharvester Limited, County Antrim, Lisburn BT28 2BP (GB)
(72) Inventor: Moloney, Brian, County Antrim, Lisburn BT28 2BP (GB)
(74) Representative: Hanna, John Philip

(57) **Abstract**

An arrangement for optimizing discharge and infiltration of runoff water, the arrangement having an infiltration means (2) to enable infiltration of stored runoff water back into the surrounding ground. The infiltration means (2) is configured to be in fluid communication with a means for draining runoff water from the surrounding ground (3).

## Description

The present invention relates to an arrangement and method for optimizing infiltration and discharge of runoff water. In particular, the present invention relates to an arrangement and method for optimizing water drainage from a soakaway/infiltration tank.

Runoff water is rainfall that runs over impermeable surfaces such as rooftops and paved surfaces into sewer systems which carry the runoff water to a watercourse such as a river, lake or stream. During long periods of rainfall or periods of heavy rainfall, runoff water can cause sewer systems and/or watercourses to become overloaded resulting in floods. In recent years, soakaways/infiltration tanks have been implemented to try to overcome this problem. Soakaways/infiltration tanks are underground structures that are capable of temporarily storing runoff water while it percolates into the ground thereby limiting runoff water discharge into sewer networks and watercourses. This reduces the risk of flooding while also recharging aquifers and ground water levels and avoiding costs of sewer upgrading. This is particularly beneficial in areas of ground with low water levels and where aquifers have been depleted as a result of excessive water extraction. Soakaways/infiltration tanks are also widely used in areas remote from public sewers or a watercourse.

However, in order to avoid flooding, soakaways/infiltration tanks must empty their stored water into the ground at an efficient rate to enable storage capacity for upcoming precipitation events. The requirement for the soakaways/infiltration tanks to discharge their stored stormwater sufficiently quickly to provide the necessary capacity to receive run-off from a subsequent storm is regularly set out within engineering design guidelines and enforced by municipalities or regulatory agencies. Therefore, soakaways/infiltration tanks cannot be permitted for use in areas where percolation rates of the stored stormwater into the surrounding ground are not efficient enough to avoid flooding of a soakaway/infiltration tank.

It is an object of the present invention to mitigate the above-mentioned disadvantages regarding the use of soakaway/infiltration tank.

It is a further object of the present invention to provide an arrangement to optimize infiltration of runoff water into the surrounding ground.

It is a further object of the present invention to provide an arrangement to reduce drainage of runoff water into a means for draining runoff water from the surrounding ground such as sewer or watercourse.

It is a further object of the present invention to provide an improved arrangement to avoid flooding caused by excessive runoff water.

According to a first aspect of the invention there is provided an arrangement capable of optimizing discharge and infiltration of runoff water, the arrangement comprising an infiltration means to enable infiltration of stored runoff water into the surrounding ground, the infiltration means being configurable to be in fluid communication with a means for draining runoff water from the surrounding ground.

Preferably, the infiltration means is configurable to store runoff water.

Ideally, the infiltration means is configurable to store runoff water as it gradually infiltrates into the surrounding ground.

Preferably, the arrangement comprises a control means for regulating discharge of stored runoff water into the means for draining runoff water from the surrounding ground.

Preferably, the arrangement is configurable to receive weather forecast data.

Preferably, the arrangement is configurable to receive weather forecast data and data defining the water level in the infiltration means.

Preferably, the arrangement is configurable to operate the control means based on weather forecast data and/or the water level data.

Ideally, the runoff water is stormwater runoff.

Preferably, the means for draining runoff water from the surrounding ground is a sewer or watercourse.

Preferably, the weather forecast data comprises at least rainfall predictions and flood warnings.

Preferably, the arrangement comprises a regulation means to enable or disable passage of stored runoff water out of the infiltration means for discharge into the means for draining runoff water from the surrounding ground.

Preferably, the control means comprises a regulation means to enable or disable passage of stored runoff water out of the infiltration means for discharge into the means for draining runoff water from the surrounding ground.

Ideally, in one embodiment, the regulation means is a valve.

Alternatively, the regulation means may be a pump or any other means suitable to enable or disable the passage of stored runoff water.

Preferably, the arrangement comprises at least one level sensor to detect the level of stored runoff water in the infiltration means.

Preferably, the control means comprises at least one level sensor to detect the level of stored runoff water in the infiltration means.

Preferably, the at least one level sensor comprises a float, pressure or ultrasound detector or similar sensor.

Preferably, the arrangement comprises an electronic controller to control the regulation means.

Preferably, the control means comprises an electronic controller to control the regulation means.

Preferably, the arrangement comprises a communication means capable of receiving weather forecast data.

Preferably, the control means comprises a communication means capable of receiving weather forecast data.

Preferably, the communication means is capable of receiving weather forecast data at regular intervals.

Preferably, the communication means is capable of receiving weather forecast data at predetermined intervals.

Preferably, the communication means is capable of receiving weather forecast data when prompted to do so.

Ideally, the communication means is capable of receiving site-specific weather forecast data.

Ideally, the communication means is configurable to analyse weather forecast data.

Ideally, the communication means is configurable to predict a likely runoff water volume from an upcoming precipitation event.

Ideally, the communication means is configurable to predict a safe level of runoff water that can be stored in the infiltration means prior to an upcoming precipitation event.

By safe level we mean the maximum level of stored runoff water that can be in the infiltration means prior to an upcoming precipitation event to ensure that there is a proportionate volume available in the infiltration means so that the predicted likely runoff water volume from an upcoming precipitation event would not exceed the available volume within the infiltration means.

Ideally, the arrangement is configurable to continuously operate.

Advantageously, the weather forecast is continuously monitored to detect changes in the predicted runoff water volume from upcoming precipitation events and consequently any changes to the safe level.

Preferably, the arrangement is configurable to operate automatically.

Advantageously, this reduces the requirement for human input.

Preferably, the arrangement is electrically powered.

Preferably the arrangement is battery powered.

Preferably, the arrangement is mains powered.

Preferably, the arrangement is powered by a combination of battery and mains power.

Preferably, the arrangement comprises a separate backup power source in case of a power outage or failure.

Alternatively, the arrangement is hydraulically powered, solar powered or powered by any other means or combination of means suitable to power the arrangement.

Preferably, the arrangement comprises at least one transmitter.

Preferably, the arrangement comprises at least one wired transmitter.

Preferably, the arrangement comprises at least one wireless transmitter.

Preferably, the arrangement comprises at least one receiver.

Preferably, the arrangement comprises at least one wired receiver.

Preferably, the arrangement comprises at least one wireless receiver.

Preferably, the arrangement comprises at least one transceiver.

Preferably, the arrangement comprises at least one wired transceiver.

Preferably, the arrangement comprises at least one wireless transceiver.

Ideally, the communication means is configurable to transmit the safe level of runoff water storage to the electronic controller.

Advantageously, this arrangement enables the use of infiltration arrangements in any area, regardless of infiltration rate, thereby optimizing the volume of runoff water infiltration into the surrounding ground and reducing water discharge into the means for draining runoff water from the surrounding ground resulting in a decreased risk of flooding of the means for draining runoff water from the surrounding ground.

Preferably, the communication means is configurable to automatically transmit the safe level of runoff water that can be stored in the infiltration means prior to an upcoming precipitation event to the electronic controller.

Preferably, the communication means is configurable to transmit the safe level of runoff water that can be stored in the infiltration means required prior to an upcoming precipitation event to the electronic controller at regular intervals.

Preferably, the communication means is configurable to transmit the safe level of runoff water that can be stored in the infiltration means required prior to an upcoming precipitation event to the electronic controller at irregular intervals.

Preferably, the communication means is configurable to transmit the safe level of runoff water that can be stored in the infiltration means required prior to an upcoming precipitation event to the electronic controller at predetermined intervals.

Preferably, the communication means comprises at least one transmitter.

Preferably, the communication means comprises at least one wired transmitter.

Preferably, the communication means comprises at least one wireless transmitter.

Preferably, the communication means comprises at least one receiver.

Preferably, the communication means comprises at least one wired receiver.

Preferably, the communication means comprises at least one wireless receiver.

Preferably, the communication means comprises at least one transceiver.

Preferably, the communication means comprises at least one wired transceiver.

Preferably, the communication means comprises at least one wireless transceiver.

Ideally, the communication means is configurable to transmit the safe level of runoff water that can be stored in the infiltration means required prior to an upcoming precipitation event to the electronic controller via a wired network.

Ideally, the communication means is configurable to transmit the safe level of runoff water that can be stored in the infiltration means required prior to an upcoming precipitation event to the electronic controller via a wireless network.

Preferably, the communication means is configurable to transmit the safe level of runoff water that can be stored in the infiltration means required prior to an upcoming precipitation event to the electric controller via any other suitable means of transmitting information.

Ideally, the communication means, electronic controller, regulation means and at least one level sensor is configurable to communicate with at least one of the other.

Ideally, the communication means, electronic controller, regulation means and at least one level sensor is configurable to communicate with at least one of the other to transmit information.

Ideally, the communication means, electronic controller, regulation means and at least one level sensor is configurable to communicate with at least one of the other to receive information.

Ideally, the communication means, electronic controller, regulation means and at least one level sensor is configurable to communicate with at least one of the other to transmit instructions.

Ideally, the communication means, electronic controller, regulation means and at least one level sensor is configurable to communicate with at least one of the other to receive instructions.

Ideally, the communication means, electronic controller, regulation means and at least one level sensor is configurable to communicate with at least one of the other via a wired network.

Ideally, the communication means, electronic controller, regulation means and at least one level sensor is configurable to communicate with at least one of the other via a wireless network.

Ideally, the communication means, electronic controller, regulation means and at least one level sensor is configurable to communicate with at least one of the other via any other means suitable to transmit information and/or instructions.

Preferably, in one embodiment, the communication means is configurable to transmit information and/or instructions to the electronic controller only.

Preferably, in one embodiment, the electronic controller only is configurable to transmit information and/or instructions to the regulation means only.

Preferably, in one embodiment, the electronic controller is configurable to receive information and/or instructions from the communication means and at least one level sensor only.

Preferably, in one embodiment, the at least one level sensor is configurable to transmit information and/or instructions to the electronic controller only.

Preferably, in one embodiment, the regulation means is configurable to receive information and/or instructions from the electronic controller only.

Preferably, the infiltration means is configurable to connect to and be in fluid communication with a network of pipe such as storm drains which collect and transport runoff water from the surface of the ground.

Preferably, the infiltration means is modular.

Advantageously, this reduces bulkiness of the infiltration means, enabling easy transportation to areas for use.

Further advantageously, this enables customisation of the size of the infiltration means depending on the site and weather requirements.

Alternatively, the infiltration means may be one piece which is custom built or standard.

Preferably, the infiltration means may be linked to one or more other infiltration means configurable to work together as one large infiltration means.

Preferably, the infiltration means comprises one or more tanks for storing runoff water.

Ideally, the one or more tanks comprise at least one opening to allow stored runoff water to pass through and infiltrate out of the one or more tanks.

Preferably, the one or more tanks comprise at least one opening to allow stored runoff water to pass through and infiltrate out of the one or more tanks.

Preferably, the infiltration means is formed from any material suitable to store run off water such as concrete, steel and/or plastic and/or any other suitable material.

Alternatively, the infiltration means is formed from a porous material.

Preferably, in another embodiment, the infiltration means comprises one or more crates.

Preferably, the infiltration means comprises a plurality of crates.

Ideally, the infiltration means comprises a plurality of crates that are fixed together.

Ideally, the one or more crates are configurable to stack on top of one or more other crates.

Ideally, the one or more crates are configured adjacent to one another.

Preferably, the one or more crates comprise at least one opening to allow runoff water to pass through and into the one or more crates.

Preferably, the one or more crates comprise at least one opening to allow stored runoff water to pass through and infiltrate out of the one or more crates.

Most preferably, the one or more crates comprise a plurality of openings to allow stored runoff water to pass through and infiltrate out of the one or more crates in any direction.

Advantageously, the plurality of openings maximises infiltration of stored runoff water into the surrounding environment.

Ideally, the one or more crates are a cube or cuboid shape having 6 flat faces.

Advantageously, the one or more crates are easily stacked on top of each other.

Ideally, the one or more crates are hollow to increase the storage capacity of the infiltration means.

Ideally, the one or more crates comprise one or more beams to increase the structural integrity of the one or more crates.

Ideally, the one or beams extend from opposite side walls of the one or more crates.

Ideally, the one or beams extend through the centre of the one or more crates.

Ideally, the one or more crates comprise a fixing means to fix the one or more crates together, if necessary.

Preferably, in use, the infiltration means is located underground.

Preferably, the infiltration means comprises at least one filter means such as a textile membrane to prevent the passage of debris into the infiltration means.

Advantageously, by preventing the passage of debris into the infiltration means, the filter means protects the infiltration means from damage thereby extending the lifespan of the infiltration means.

Preferably, the filter means is permeable.

Ideally, the filter means is selectively permeable.

Ideally, the filter means is selectively permeable to water.

Advantageously, this allows passage of runoff water into and out of the infiltration means while preventing the passage of silt and/or debris into the infiltration means.

Preferably, the arrangement comprises a discharge means for discharging stored runoff water from the infiltration means into the means for draining runoff water from the surrounding ground.

Preferably, the arrangement comprises a discharge means such as a pipe or conduit.

Preferably, the infiltration means is in fluid communication with the means for draining runoff water from the surrounding ground via the discharge means.

Ideally, the regulation means is located at or about the discharge means.

Ideally, the regulation means is configurable to open.

Ideally, the regulation means is configurable to close.

Ideally, the regulation means is configurable to open and/or close at intervals.

Ideally, the regulation means is configurable to open and/or close at predetermined intervals.

Preferably, the regulation means is configurable to open and/or close at predetermined intervals to enable controlled levels of stored runoff water to discharge into the means for draining runoff water from the surrounding ground gradually.

Advantageously, gradual discharge of stored runoff water prevents flooding or overloading of the means for draining runoff water from the surrounding ground.

Ideally, the regulation means is configurable to open and/or close when prompted.

Preferably, the regulation means is automated.

Preferably, the regulation means comprises at least one transmitter.

Preferably, the regulation means comprises at least one wired transmitter.

Preferably, the regulation means comprises at least one wireless transmitter.

Preferably, the regulation means comprises at least one receiver.

Preferably, the regulation means comprises at least one wired receiver.

Preferably, the regulation means comprises at least one wireless receiver.

Preferably, the regulation means comprises at least one transceiver.

Preferably, the regulation means comprises at least one wired transceiver.

Preferably, the regulation means comprises at least one wireless transceiver.

Preferably, the electronic controller comprises at least one transmitter.

Preferably, the electronic controller comprises at least one wired transmitter.

Preferably, the electronic controller comprises at least one wireless transmitter.

Preferably, the electronic controller comprises at least one receiver.

Preferably, the electronic controller comprises at least one wired receiver.

Preferably, the electronic controller comprises at least one wireless receiver.

Preferably, the electronic controller comprises at least one transceiver.

Preferably, the electronic controller comprises at least one wired transceiver.

Preferably, the electronic controller comprises at least one wireless transceiver.

Ideally, the electronic controller is configurable to interact with the regulation means.

Ideally, the electronic controller is configurable to open the regulation means.

Ideally, the electronic controller is configurable to close the regulation means.

Preferably, the regulation means is normally open.

Advantageously, this means that in case of power outage or break in communication, the regulation means will remain open to allow discharge of stored runoff water into the means for draining runoff water from the surrounding ground, preventing overloading or flooding of the infiltration means.

Preferably, the electronic controller is connected to the regulation means.

Preferably, the electronic controller is wirelessly connected to the regulation means.

Preferably, the electronic controller is locatable above ground, at the same site as the infiltration means.

Alternatively, the electronic controller is locatable on the infiltration means.

Ideally, the electronic controller is configurable to communicate with the regulation means.

Ideally, the electronic controller is configurable to communicate with the regulation means at regular intervals.

Ideally, the electronic controller is configurable to communicate with the regulation means irregular intervals.

Ideally, the electronic controller is configurable to communicate with the regulation means at predetermined intervals.

Ideally, the electronic controller is configurable to communicate with the regulation means automatically.

Ideally, the electronic controller is configurable to communicate with the regulation means to open and/or close the regulation means.

Ideally, the electronic controller is configurable to communicate with the regulation means to automatically open and/or close the regulation means.

Ideally, the electronic controller is configurable to communicate with the regulation means to maintain the regulation in an open configuration.

Ideally, the electronic controller is configurable to communicate with the regulation means to maintain the regulation means in a closed configuration.

Ideally, the electronic controller is configurable to communicate with the regulation means via a wired network.

Ideally, the electronic controller is configurable to communicate with the regulation means via a wireless network.

Ideally, the electronic controller is configurable to communicate with the regulation means via any other means suitable to transmit information and/or instructions.

Ideally, when the regulation means is in an open configuration stored runoff water may pass through the discharge means and therefore may pass into the means for draining runoff water from the surrounding ground.

Ideally, the regulation means is in an open configuration when the level of stored runoff water in the infiltration means is above the safe level.

Ideally, the regulation means is only in an open configuration when the level of stored runoff water in the infiltration means is above the safe level and/or when there is a power outage or break in communication.

Advantageously, this prevents flooding of the infiltration means and prevents flooding of the surrounding environment when the level of stored runoff water in the infiltration means is above the safe level.

Preferably, when the regulation means is in a closed configuration stored runoff water is prevented from passing through the discharge means and therefore prevented from passing into the means for draining runoff water from the surrounding ground.

Ideally, the regulation means is in a closed configuration when the level of stored runoff water in the infiltration means is at or below the safe level.

Ideally, the regulation means is only in a closed configuration when the level of stored runoff water in the infiltration means is at or below the safe level.

Advantageously, this reduces the level of stored runoff water being discharged into the means for draining runoff water from the surrounding ground, preventing flooding of the means for draining runoff water from the surrounding ground while enhancing infiltration of stored runoff water into the surrounding environment, recharging ground water levels and/or aquifers.

Preferably, the arrangement comprises a backflow preventer to prevent backflow of discharged runoff water back into the infiltration means from the means for draining runoff water from the surrounding ground.

Preferably, the control means comprises a backflow preventer.

Preferably, the regulation means comprises a backflow preventer.

Preferably, the electronic controller is connected to the at least one level sensor.

Preferably, the electronic controller is wirelessly connected to the at least one level sensor.

Preferably, the at least one level sensor is locatable within the infiltration means.

Preferably, the at least one level sensor comprises at least one transmitter.

Preferably, the at least one level sensor comprises at least one wired transmitter.

Preferably, the at least one level sensor comprises at least one wireless transmitter.

Preferably, the at least one level sensor comprises at least one receiver.

Preferably, the at least one level sensor comprises at least one wired receiver.

Preferably, the at least one level sensor comprises at least one wireless receiver.

Preferably, the at least one level sensor comprises at least one transceiver.

Preferably, the at least one level sensor comprises at least one wired transceiver.

Preferably, the at least one level sensor comprises at least one wireless transceiver.

Ideally, the at least one level sensor is configurable to interact with the electronic controller.

Preferably, the at least one level sensor is configurable to detect the level of stored runoff water in the infiltration means at intervals.

Preferably, the at least one level sensor is configurable to detect the level of stored runoff water in the infiltration means at regular intervals.

Preferably, the at least one level sensor is configurable to detect the level of stored runoff water in the infiltration means at predetermined intervals.

Preferably, the at least one level sensor is configurable to detect the level of stored runoff water in the infiltration means when prompted to do so.

Preferably, the at least one level sensor is configurable to transmit the level of stored runoff water in the infiltration means to the electronic controller.

Preferably, the at least one level sensor is configurable to transmit the level of stored runoff water in the infiltration means to the electronic controller at regular intervals.

Preferably, the at least one level sensor is configurable to transmit the level of stored runoff water in the infiltration means to the electronic controller at irregular intervals.

Preferably, the at least one level sensor is configurable to transmit the level of stored runoff water in the infiltration means to the electronic controller at predetermined intervals.

Preferably, the at least one level sensor is configurable to automatically transmit the level of stored runoff water in the infiltration means to the electronic controller.

Preferably, the at least one level sensor is configurable to transmit the level of stored runoff water in the infiltration means to the electronic controller via a wired network.

Preferably, the at least one level sensor is configurable to transmit the level of stored runoff water in the infiltration means to the electronic controller via a wireless network.

Preferably, the at least one level sensor is configurable to transmit the level of stored runoff water in the infiltration means to the electronic controller via any other means suitable to transmit information.

Preferably, the at least one level sensor comprises one or more detectors arrangeable to detect the volume of stored runoff water at different depths in the infiltration means.

Most preferably, the at least one level sensor comprises a plurality of detectors.

Ideally, the at least one level sensor comprises a plurality of detectors at spaced depths in the infiltration means.

Preferably, the at least one level sensor is configurable to detect the level of stored runoff water around the periphery of the infiltration means.

Advantageously, this prevents inaccuracies in the level of stored runoff water being transmitted to the electronic controller due to sloping or sinking at one side of the infiltration means.

Preferably, the at least one level sensor is configurable to detect the level of stored runoff water at each corner of the infiltration means.

Preferably, the communication means is remote from the regulation means, at least one level sensor and/or electronic controller.

Preferably, the arrangement comprises a cloud control centre.

Ideally, the communication means comprises a cloud control centre.

Preferably, the arrangement comprises a user interface to enable operational staff to monitor site conditions and/or any automation taking place.

Preferably, the arrangement is configurable to notify operational staff of site conditions and/or any automation taking place.

Preferably, the arrangement is configurable to transmit alerts to alert operational staff to a power outage or communication failure.

According to a second aspect of the invention there is provided a control means for an infiltration means, the infiltration means being configured to enable infiltration of stored runoff water into the surrounding ground and being in fluid communication with a means for draining runoff water from the surrounding ground, the control means comprising a regulation means to enable or disable passage of stored runoff water out of the infiltration means for discharge into the means for draining runoff water from the surrounding ground, wherein the control means is configurable to automatically open and/or close the regulation means in order to regulate the discharge of stored runoff water into the means for draining runoff water from the surrounding ground, based on a predicted likely volume of runoff water from an upcoming precipitation event communicated to the control means and a current volume of runoff water being stored in the infiltration means communicated to the control means.

Accordingly the present invention provides a method for optimizing discharge and infiltration of runoff water, comprising the steps of installing a control means onto an infiltration means, the infiltration means being configured to enable infiltration of runoff water into the surrounding ground and being in fluid communication with a means for draining runoff water from the surrounding ground , the control means being capable of regulating discharge of runoff water into the means for draining runoff water from the surrounding ground, the control means further being capable of receiving weather forecast data and data defining the water level in the infiltration means, the method comprising the step of operating the control means based on that weather forecast data.

Preferably, the method comprising the step of providing an opening in the ground at an area where the infiltration means is to be located.

Preferably, the method comprising the step of providing an opening in the ground large enough to house the infiltration means so that the uppermost face of the infiltration means is below ground level.

Preferably, the method comprising the step of providing a filter means.

Preferably, the method comprising the step of installing the filter means in the opening such as a textile membrane.

Preferably, the method comprising the step of installing the filter means in the opening so that the base and sides of the opening are covered by the filter means and a portion of the filter means extends out of the opening.

Preferably, the method comprising the step of installing the infiltration means into the opening in the ground.

Preferably, in one embodiment, the method comprising the step of fixing modules of the infiltration means and/or one or more infiltration means together.

Alternatively, in another embodiment, the method comprising the step of installing a one-piece infiltration means into the opening in the ground.

Preferably, the method comprising the step of connecting the infiltration means to a pipe network such as storm drains which collect and transport runoff water from the surface of the ground.

Preferably, the method comprising the step of connecting the infiltration means to the means for draining runoff water from the surrounding ground via a discharge means.

Ideally, the method comprising the step of covering the infiltration means with the filter means.

Preferably, the method comprising the step of wrapping the infiltration means inside the filter means using the portion of the filter means covering the sides of the opening and extending out of the opening.

Preferably, the method comprising the step of wrapping the infiltration means inside the filter means using the portion of the filter means covering the sides of the opening and extending out of the opening so that opposite ends of the filter means overlap.

Preferably, the method comprising the step of wrapping the infiltration means inside the filter means so that every portion of the infiltration means is covered by the filter means.

Advantageously, this prevents any soil or other debris from entering the infiltration means.

Preferably, the method comprising the step of sealing the filter means so that the overlapping position of the ends of the filter means remains intact.

Advantageously, this prevents the filter means from unwrapping.

Preferably, the method comprising the step of filling the gap between the uppermost face of the infiltration means and the ground level surrounding the opening so that the infiltration means is not visible, and the ground is free from holes or dips.

Preferably, the method comprising the step of transmitting instructions to bring the regulation means into a closed position to stop runoff water being discharged into the means for draining runoff water from the surrounding ground.

Preferably, the method comprising the step of receiving weather forecast data to the communication means.

Preferably, the method comprising the step of analysing that weather forecast data.

Preferably, the method comprising the step of predicting a likely runoff water volume from any upcoming precipitation event.

Preferably, the method comprising the step of predicting a safe level of runoff water that can be in the infiltration means, prior to an upcoming precipitation event.

Preferably, the method comprising the step of transmitting the safe level of runoff water to an electronic controller.

Preferably, the method comprising the step of automatically transmitting the safe level of runoff water to the electronic controller.

Ideally, the method comprising the step of detecting a current level of runoff water in the infiltration means.

Preferably, the method comprising the step of transmitting the current level of runoff water in the infiltration means to the electronic controller.

Preferably, the method comprising the step of automatically transmitting the current level of runoff water in the infiltration means to the electronic controller.

Preferably, the method comprising the step of the electronic controller determining whether the current level of runoff water in the infiltration means is above the safe level of runoff that can be in the infiltration means prior to an upcoming precipitation event.

Preferably, the method comprising the step of transmitting instructions to the regulation means from the electronic controller to maintain the closed position of the regulation means if the current level of runoff water in the infiltration means is below the safe level.

Preferably, the method comprising the step of automatically transmitting instructions to the regulation means from the electronic controller to maintain the closed position of the regulation means if the current level of runoff water in the infiltration means is below the safe level.

Preferably, the method comprising the step of transmitting instructions to the regulation means from the electronic controller to open and/or close the regulation means at predetermined intervals to enable gradual discharge of runoff water into the means for draining runoff water from the surrounding ground prior to an upcoming precipitation event when the current level of runoff water in the infiltration means is above the safe level.

Preferably, the method comprising the step of automatically transmitting instructions to the regulation means from the electronic controller to open and/or close the regulation means at predetermined intervals to enable gradual discharge of runoff water into the means for draining runoff water from the surrounding ground prior to an upcoming precipitation event when the current level of runoff water in the infiltration means is above the safe level.

The invention will now be described with reference to the accompanying drawings: -
Figure 1 is a perspective view of an arrangement capable of optimizing discharge and infiltration of runoff water.
Figure 2 is a perspective view of the arrangement illustrating the infiltration of runoff water into the surrounding ground.
Figure 3 is a perspective view of the arrangement in an open configuration.
Figure 4 is a perspective view of the arrangement in a closed configuration.
Figure 5 shows a perspective view of an infiltration means according to the present invention.

In the drawings there is shown an arrangement indicated generally by reference numeral 1 capable of optimizing discharge and infiltration of runoff water. The arrangement 1 having an infiltration arrangement 2 to enable infiltration of stored runoff water into the surrounding ground. The infiltration arrangement 2 is configured to be in fluid communication with an arrangement for draining runoff water from the surrounding ground 3. The arrangement 1 further having a control arrangement 4 for regulating discharge of stored runoff water into the arrangement for draining runoff water from the surrounding ground 3. The arrangement 1 is configured to receive weather forecast data and operate the control arrangement 4 based on that weather forecast data.

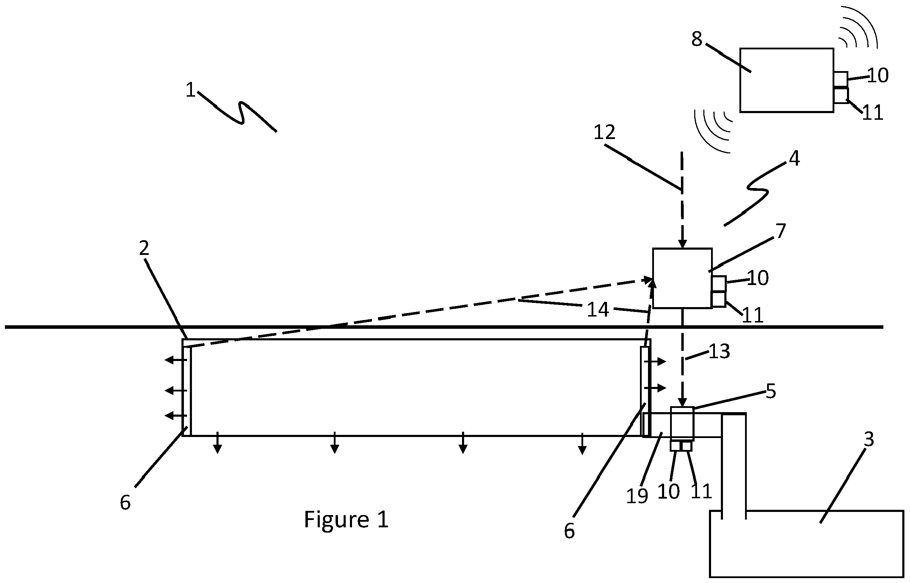

Referring to the embodiment shown in figures 1-4, the runoff water is stormwater runoff. The arrangement for draining runoff water from the surrounding ground 3 is a sewer or watercourse. The weather forecast data includes rainfall predictions and flood warnings.

The arrangement 1 has a regulation arrangement 5 to enable or disable passage of runoff water out of the infiltration means 2 for discharge into the arrangement for draining runoff water from the surrounding ground 3. In this embodiment, the control arrangement 4 has a regulation arrangement 5 to enable or disable passage of runoff water out of the infiltration arrangement 2 for discharge into the arrangement for draining runoff water from the surrounding ground 3. In this embodiment, the regulation arrangement 5 is a valve. However, the regulation arrangement 5 may be a pump or any other means suitable to enable or disable the passage of runoff water.

The arrangement 1 has at least one level sensor 6 to detect the level of runoff water in the infiltration arrangement 2. In this embodiment, the control arrangement 4 has at least one level sensor 6 to detect the level of runoff water in the infiltration arrangement 2.

The arrangement 1 has an electronic controller 7 to control the regulation arrangement 5. In this embodiment, the control arrangement 4 has an electronic controller 7 to control the regulation arrangement 5.

The arrangement 1 has a communication arrangement 8 capable of receiving weather forecast data. In this embodiment, the control arrangement 4 has a communication arrangement 8 capable of receiving weather forecast data. The communication arrangement 8 is capable of receiving weather forecast data at regular intervals. The communication arrangement 8 is capable of receiving weather forecast data at predetermined intervals. The communication arrangement 8 is capable of receiving weather forecast data when prompted to do so. The communication arrangement 8 is capable of receiving site-specific weather forecast data. The communication arrangement 8 is configurable to analyse weather forecast data. The communication arrangement 8 is configurable to predict a likely runoff water volume from an upcoming precipitation event. The communication arrangement 8 is configurable to predict a safe level 9 of runoff water storage in the infiltration arrangement 2 required prior to an upcoming precipitation event to ensure that the predicted volume of runoff water does not exceed the available storage volume in the infiltration arrangement 2. By safe level we mean the maximum level of runoff water that can be in the infiltration arrangement prior to an upcoming precipitation event to ensure that there is a proportionate volume available in the infiltration arrangement so that the predicted likely runoff water volume from an upcoming precipitation event would not exceed the available volume within the infiltration arrangement.
The arrangement 1 is configurable to continuously operate. This means that the weather forecast is continuously monitored to detect changes in the predicted runoff water volume from upcoming precipitation events and consequently any changes to the safe level 9. The arrangement 1 is configurable to operate automatically. This reduces the requirement for human input. The arrangement 1 is electrically powered. The arrangement 1 is battery powered. The arrangement 1 is mains powered. The arrangement 1 is powered by a combination of battery and mains power. The arrangement 1 has a separate backup power source in case of a power outage or failure. The arrangement 1 may be hydraulically powered, solar powered or powered by any other means or combination of means suitable to power the arrangement 1.

The arrangement 1 has at least one transmitter 10. The arrangement 1 has at least one wired transmitter. The arrangement 1 has at least one wireless transmitter. The arrangement 1 has at least one receiver 11. The arrangement 1 has at least one wired receiver. The arrangement 1 comprises at least one wireless receiver. The arrangement 1 has at least one transceiver. The arrangement 1 has at least one wired transceiver. The arrangement 1 has at least one wireless transceiver.

The communication arrangement 8 is configured to transmit the safe level 9 of runoff water storage to the electronic controller 7. This enables the use of infiltration arrangements in any area, regardless of infiltration rate, thereby optimizing the volume of runoff water infiltration into the surrounding ground and reducing water discharge into the arrangement for draining runoff water from the surrounding ground resulting in a decreased risk of flooding of the means for draining runoff water from the surrounding ground. The communication arrangement 8 is configured to automatically transmit the safe level 9 of runoff water to the electronic controller 7. The communication arrangement 8 is configurable to transmit the safe level 9 of runoff water to the electronic controller 7 at regular intervals. The communication arrangement 8 is configurable to transmit the safe level 9 of runoff water to the electronic controller 7 at irregular intervals. The communication arrangement 8 is configurable to transmit the safe level 9 of runoff water to the electronic controller 7 at predetermined intervals. The communication arrangement 8 has at least one transmitter 10. The communication arrangement 8 has at least one wired transmitter. The communication arrangement 8 has at least one wireless transmitter. The communication arrangement 8 has at least one receiver 11. The communication arrangement 8 has at least one wired receiver. The communication arrangement 8 has at least one wireless receiver. The communication arrangement 8 has at least one transceiver. The communication arrangement 8 has at least one wired transceiver. The communication arrangement 8 has at least one wireless transceiver. In this embodiment, the communication arrangement 8 is configured to transmit the safe level 9 of runoff water storage to the electronic controller 7 via a wireless network. However, the communication arrangement 8 may be configured to transmit the safe level 9 of runoff water storage to the electronic controller 7 via a wired network. The communication arrangement 8 is configurable to transmit the safe level 9 of runoff water storage to the electric controller 7 via any other suitable means of transmitting information.

The communication arrangement 8, electronic controller 7, regulation arrangement 5 and at least one level sensor 6 are configurable to communicate with each other. The communication arrangement 8, electronic controller 7, regulation arrangement 5 and at least one level sensor 6 are configurable to communicate with each other to transmit information. The communication arrangement 8, electronic controller 7, regulation arrangement 5 and at least one level sensor 6 are configurable to communicate with each other to receive information. The communication arrangement 8, electronic controller 7, regulation arrangement 5 and at least one level sensor 6 are configurable to communicate with each other to transmit instructions. The communication arrangement 8, electronic controller 7, regulation arrangement 5 and at least one level sensor 6 are configurable to communicate with each other to receive instructions. The communication arrangement 8, electronic controller 7, regulation arrangement 5 and at least one level sensor 6 are configurable to communicate with each other via a wired network. The communication arrangement 8, electronic controller 7, regulation arrangement 5 and at least one level sensor 6 are configurable to communicate with each other via a wireless network. The communication arrangement 8, electronic controller 7, regulation arrangement 5 and at least one level sensor 6 are configurable to communicate with each other via any other means suitable to transmit information and/or instructions. In this embodiment, the communication arrangement 8 is configured to transmit information and/or instructions to the electronic controller 7 only. In figures 1-4, the transmission of information and/or instructions from the communication arrangement 8 to the electronic controller 7 is indicated by arrow 12. In this embodiment, the electronic controller 7 is configured to transmit information and/or instructions to the regulation arrangement 5 only. In figures 1-4, the transmission of information and/or instructions from the electronic controller to the regulation arrangement 5 is indicated by arrow 13. In this embodiment, the electronic controller 7 is configured to receive information and/or instructions from the communication arrangement 8 and at least one level sensor 6 only. In this embodiment, the at least one level sensor 6 is configured to transmit information and/or instructions to the electronic controller 7 only. In figures 1-4, the transmission of information and/or instructions from the at least one level sensor 6 to the electronic controller 7 is indicated by arrow 14. In this embodiment, the regulation arrangement 5 is configured to receive information and/or instructions from the electronic controller 7 only.

In this embodiment, the infiltration arrangement 2 is a one-piece infiltration arrangement. However, the infiltration arrangement may also be modular. The infiltration arrangement 2 has one or more crates 16. The infiltration arrangement 2 comprises a plurality of crates. The infiltration arrangement 2 comprises a plurality of crates that are fixed together. The one or more crates 16 are configurable to stack on top of one or more other crates. The one or more crates 16 are configured adjacent to one another. The one or more crates 16 have at least one opening 17 to allow runoff water to pass through and infiltrate out of the one or more crates 16. The one or more crates 16 have a plurality of openings 17 to allow runoff water to pass through and infiltrate out of the one or more crates in any direction, as indicated by arrows 15. The plurality of openings 17 maximises infiltration of runoff water into the surrounding environment. The one or more crates 16 are a cube or cuboid shape having 6 flat faces. The one or more crates 16 are easily stacked on top of each other. The one or more crates 16 are hollow to increase the storage capacity of the infiltration arrangement 2. The one or more crates 16 have one or more beams 18 to increase the structural integrity of the one or more crates 16. The one or beams 18 extend from opposite side walls of the one or more crates 16. The one or beams 18 extend through the center of the one or more crates 16. The one or more crates 16 comprise a fixing arrangement to fix the one or more crates 16 together, if necessary. In use, the infiltration arrangement 2 is located underground. The arrangement 1 has at least one filter arrangement (not shown) such as a textile membrane to prevent the passage of debris into the infiltration means 2. By preventing the passage of debris into the infiltration arrangement, the filter means protects the infiltration arrangement 2 from damage thereby extending the lifespan of the infiltration arrangement 2. The filter arrangement is permeable. The filter arrangement is selectively permeable. The filter arrangement is selectively permeable to water. This allows passage of runoff water into and out of the infiltration arrangement 2 while preventing the passage of silt and/or debris into the infiltration arrangement. Alternatively, the infiltration arrangement may be linked to one or more other infiltration arrangements which work together as one large infiltration arrangement. The infiltration arrangement may also have one or more tanks formed from any material suitable to store run off water such as concrete, steel and/or plastic and/or a porous material and/or any other suitable material. The infiltration arrangement may also be any other suitable shape including cylindrical, regular or irregular shape.

The arrangement 1 has a discharge arrangement 19 for discharging runoff water from the infiltration arrangement 2 into the arrangement for draining runoff water from the surrounding ground 3. The arrangement 1 comprises a discharge arrangement 19 such as a pipe or conduit. The infiltration arrangement 2 is in fluid communication with the arrangement for draining runoff water from the surrounding ground 3 via the discharge arrangement 19.

The regulation arrangement 5 is located at or about the discharge arrangement 19. The regulation arrangement 5 is configurable to open. The regulation arrangement 5 is configurable to close. The regulation arrangement 5 is configurable to open and/or close at intervals.

The regulation arrangement 5 is configurable to open and/or close at predetermined intervals. The regulation arrangement 5 is configurable to open and/or close at predetermined intervals to enable controlled levels of runoff water to discharge into the arrangement for draining runoff water from the surrounding ground 3 gradually. Gradual discharge of runoff water prevents flooding or overloading of the arrangement for draining runoff water from the surrounding ground 3.

The regulation arrangement 5 is configurable to open and/or close when prompted.

The regulation arrangement 5 is automated. The regulation arrangement 5 has at least one transmitter 10. The regulation arrangement 5 has at least one wired transmitter. The regulation arrangement 5 has at least one wireless transmitter. The regulation arrangement 5 has at least one receiver 11. The regulation arrangement 5 has at least one wired receiver. The regulation arrangement 5 has at least one wireless receiver. The regulation arrangement 5 has at least one transceiver. The regulation arrangement 5 has at least one wired transceiver. The regulation arrangement 5 has at least one wireless transceiver. The electronic controller 7 has at least one transmitter 10. The electronic controller 7 has at least one wired transmitter. The electronic controller 7 has at least one wireless transmitter. The electronic controller 7 has at least one receiver 11. The electronic controller 7 has at least one wired receiver. The electronic controller 7 has at least one wireless receiver. The electronic controller 7 has at least one transceiver. The electronic controller 7 has at least one wired transceiver. The electronic controller 7 has at least one wireless transceiver. The electronic controller 7 is configured to interact with the regulation arrangement 5. The electronic controller 7 is configurable to open the regulation arrangement 5.

The electronic controller 7 is configurable to close the regulation arrangement 5. The regulation arrangement 5 is normally open. This means that in case of power outage or break in communication, the regulation arrangement 5 will remain open to allow discharge of runoff water into the arrangement for draining runoff water from the surrounding ground 3, preventing overloading or flooding of the infiltration arrangement 2. The electronic controller 7 is connected to the regulation arrangement 5. In this embodiment, the electronic controller 7 is wirelessly connected to the regulation arrangement 5.

In this embodiment, the electronic controller 7 is locatable above ground, at the same site as the infiltration arrangement 2. However, the electronic controller 7 is locatable on the infiltration arrangement 2. The electronic controller 7 is configured to communicate with the regulation arrangement 5. The electronic controller 7 is configurable to communicate with the regulation arrangement 5 at regular intervals. The electronic controller 7 is configurable to communicate with the regulation arrangement 5 at irregular intervals. The electronic controller 7 is configurable to communicate with the regulation arrangement 5 at predetermined intervals. The electronic controller 7 is configurable to communicate with the regulation arrangement 5 automatically. The electronic controller 7 is configurable to communicate with the regulation arrangement 5 to open and/or close the regulation arrangement 5. The electronic controller 7 is configurable to communicate with the regulation arrangement 5 to automatically open and/or close the regulation arrangement 5. The electronic controller 7 is configurable to communicate with the regulation arrangement 5 to maintain the regulation arrangement 5 in an open configuration. The electronic controller 7 is configurable to communicate with the regulation arrangement 5 to maintain the regulation arrangement 5 in a closed configuration. The electronic controller 7 is configurable to communicate with the regulation arrangement 5 via a wired network. In this embodiment, the electronic controller 7 is configured to communicate with the regulation arrangement 5 via a wireless network. The electronic controller 7 is configurable to communicate with the regulation arrangement 5 via any other means suitable to transmit information and/or instructions.

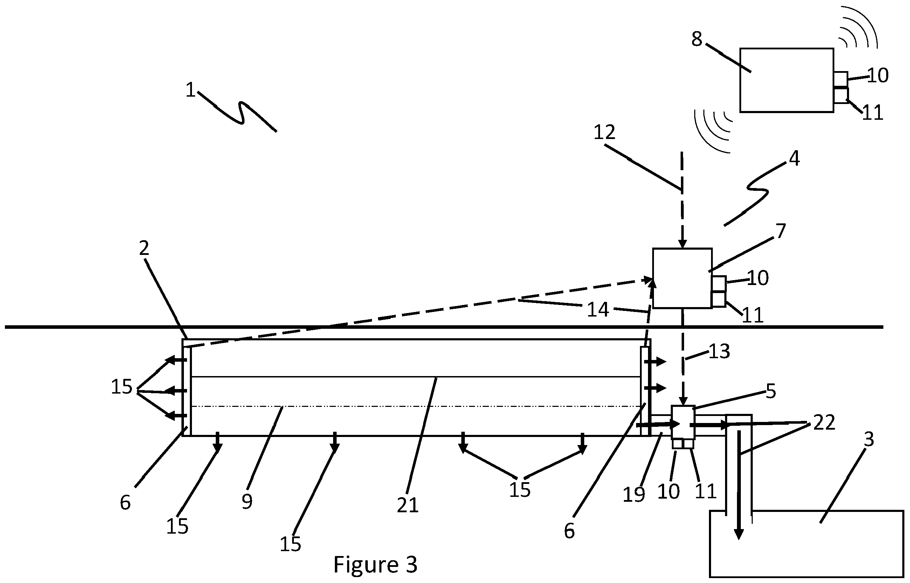

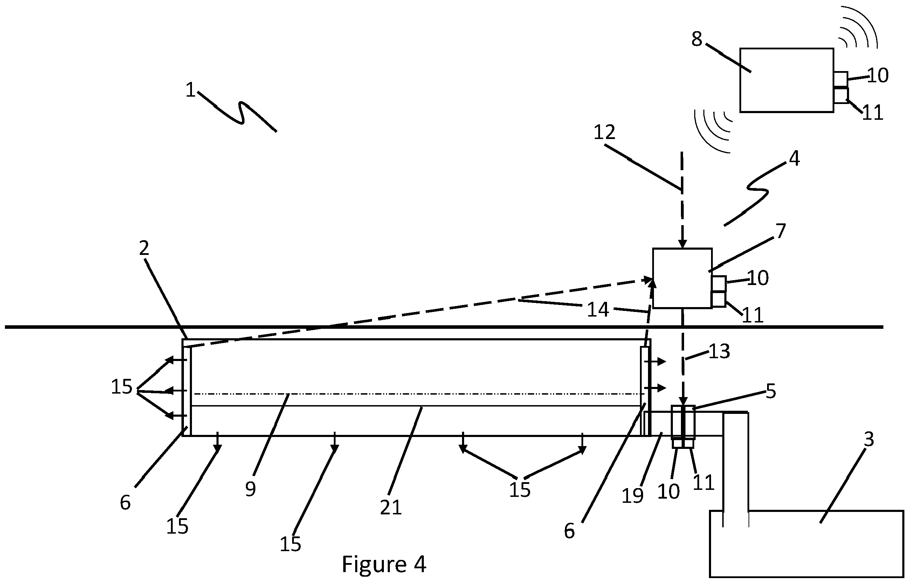

When the regulation arrangement 5 is in an open configuration runoff water may pass through the discharge arrangement 19, as shown in figure 3, and therefore may pass into the means for draining runoff water from the surrounding ground 3. The regulation arrangement 5 is in an open configuration when the current level 21 of runoff water in the infiltration arrangement 2 is above the safe level 9, as shown in figure 3. The regulation arrangement 5 is only in an open configuration when the current level 21 of runoff water in the infiltration arrangement 2 is above the safe level 9 and/or when there is a power outage or break in communication. This prevents flooding of the infiltration arrangement 2 and prevents flooding of the surrounding environment when the level of runoff water in the infiltration means 2 is above the safe level 9. When the regulation arrangement 5 is in a closed configuration, as illustrated in figure 4, runoff water is prevented from passing through the discharge arrangement 19 and therefore prevented from passing into the arrangement for draining runoff water from the surrounding ground 3. The regulation arrangement 5 is in a closed configuration when the current level 21 of runoff water in the infiltration arrangement 2 is at or below the safe level 9, as illustrated in figure 4. The regulation arrangement 5 is only in a closed configuration when the current level of runoff water 21 in the infiltration arrangement 2 is at or below the safe level 9. This reduces the level of runoff water being discharged into the arrangement for draining runoff water from the surrounding ground 3, preventing flooding of the arrangement for draining runoff water from the surrounding ground 3 while enhancing infiltration of runoff water into the surrounding environment, recharging ground water levels and/or aquifers.

The arrangement 1 has a backflow preventer to prevent backflow of runoff water back into the infiltration arrangement 2 from the arrangement for draining runoff water from the surrounding ground 3. The control arrangement 4 has a backflow preventer. The regulation arrangement 5 has a backflow preventer.

The electronic controller 7 is connected to the at least one level sensor 6. In this embodiment, the electronic controller 7 is wirelessly connected to the at least one level sensor 6. The at least one level sensor 6 is locatable within the infiltration arrangement 2. The at least one level sensor 6 has at least one transmitter 10. The at least one level sensor 6 has at least one wired transmitter. The at least one level sensor 6 has at least one wireless transmitter. The at least one level sensor 6 has at least one receiver 11. The at least one level sensor 6 has at least one wired receiver. The at least one level sensor 6 has at least one wireless receiver. The at least one level sensor 6 has at least one transceiver. The at least one level sensor 6 has at least one wired transceiver. The at least one level sensor 6 has at least one wireless transceiver. The at least one level sensor 6 is configured to interact with the electronic controller 7. The at least one level sensor 6 is configurable to detect the current level 21 of runoff water in the infiltration arrangement 2 at intervals. The at least one level sensor 6 is configurable to detect the current level 21 of runoff water in the infiltration arrangement 2 at regular intervals. The at least one level sensor 6 is configurable to detect the current level 21 of runoff water in the infiltration arrangement 2 at predetermined intervals. The at least one level sensor 6 is configurable to detect the current level 21 of runoff water in the infiltration arrangement 2 when prompted to do so. The at least one level sensor 6 is configured to transmit the current level 21 of runoff water in the infiltration arrangement 2 to the electronic controller 7. The at least one level sensor 6 is configurable to transmit the current level 21 of runoff water in the infiltration arrangement 2 to the electronic controller 6 at regular intervals. The at least one level sensor 6 is configurable to transmit the current level 21 of runoff water in the infiltration means 2 to the electronic controller 7 at irregular intervals. The at least one level sensor 6 is configurable to transmit the current level of runoff water in the infiltration arrangement 2 to the electronic controller at predetermined intervals. The at least one level sensor 6 is configured to automatically transmit the current level 21 of runoff water in the infiltration arrangement 2 to the electronic controller 7. The at least one level sensor 6 is configurable to transmit the current level 21 of runoff water in the infiltration arrangement 2 to the electronic controller 7 via a wired network. In this embodiment, the at least one level sensor 6 is configurable to transmit the current level 21 of runoff water in the infiltration arrangement 2 to the electronic controller 7 via a wireless network. The at least one level sensor 6 is configurable to transmit the current level 21 of runoff water in the infiltration arrangement 2 to the electronic controller 7 via any other means suitable to transmit information. The at least one level sensor 6 has one or more detectors arrangeable to detect the volume of runoff water at different depths in the infiltration arrangement 2. The at least one level sensor 6 has a plurality of detectors. The at least one level sensor 6 has a plurality of detectors at spaced depths in the infiltration arrangement 2. The at least one level sensor 6 is configurable to detect the level of runoff water around the periphery of the infiltration arrangement 2. The at least one level sensor 6 is configurable to detect the level of runoff water at each corner of the infiltration arrangement 2. This prevents inaccuracies in the level of runoff water being transmitted to the electronic controller 7 due to sloping or sinking at one side of the infiltration arrangement 2.

In this embodiment, the communication arrangement 8 is remote from the regulation arrangement 5, at least one level sensor 6 and/or electronic controller 7.

In this embodiment, the arrangement 1 has a cloud control center. The communication arrangement 8 has a cloud control center. The arrangement 1 has a user interface to enable operational staff to monitor site conditions and/or any automation taking place. The arrangement 1 is configurable to notify operational staff of site conditions and/or any automation taking place. The arrangement 1 is configurable to transmit alerts to alert operational staff to a power outage or communication failure.

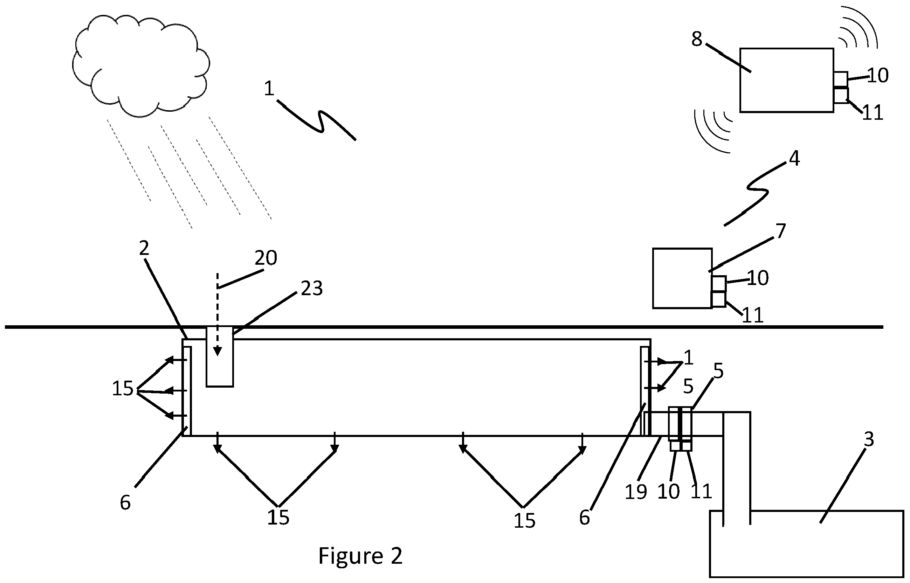

In use, and referring particularly to figure 2, runoff water from a precipitation event, indicated by arrows 20, travels via a pipe network 23 such as storm drains into the infiltration arrangement 2 where it can be stored and gradually infiltrate from the infiltration arrangement 2. This infiltration is indicated by arrows 15.

In use, and referring now to figure 3, the communication arrangement predicts a safe level of runoff 9 that can be in the infiltration arrangement 2, prior to an upcoming precipitation event. The communication arrangement 8 transmits this safe level 9 to the electronic controller 7. The at least one level sensor 6 detects a current level 21 of runoff water in the infiltration arrangement 2. The at least one level sensor 6 transmits this current level 21 to the electronic controller 7. If the safe level 9 is below the current level 21, the electronic controller 7 transmits instructions to the regulation arrangement 5 to enable discharge of stored runoff water from the infiltration arrangement 2 to the arrangement for draining runoff water from the surrounding ground 3 via the discharge arrangement 19. Discharge of runoff water via the discharge arrangement is indicated by arrows 22. The electronic controller 7 transmits instructions to the regulation arrangement 5 to open at predetermined intervals to enable gradual discharge of stored runoff water from the infiltration arrangement 2 to the arrangement for draining runoff water from the surrounding ground 3, prior to an upcoming precipitation event. The electronic controller 7 transmits instructions to the regulation arrangement 5 to open at predetermined intervals to enable gradual discharge of stored runoff water from the infiltration arrangement 2 to the means for draining runoff water from the surrounding ground 3 until the current level 21 of stored runoff water in the infiltration arrangement 2 is at or below the safe level 9. As illustrated in figure 3, when the regulation arrangement 5 is open, stored runoff water will discharge from the infiltration arrangement 2 into the arrangement for draining runoff water from the surrounding ground 3 as indicated by arrows 22 while also infiltrating from the infiltration arrangement 2 as indicated by arrows 15.

Referring now to figure 4, the communication arrangement predicts a safe level of runoff 9 that can be in the infiltration arrangement 2, prior to an upcoming precipitation event. The communication arrangement 8 transmits this safe level 9 to the electronic controller 7. The at least one level sensor 6 detects a current level 21 of runoff water in the infiltration arrangement 2. The at least one level sensor 6 transmits this current level 21 to the electronic controller 7. If the current level 21 is at or below the safe level 9, the electronic controller 7 transmits instructions to the regulation arrangement 5 to disable discharge of stored runoff water from the infiltration arrangement 2 to the arrangement for draining runoff water from the surrounding ground 3. The electronic controller 7 transmits instructions to the regulation arrangement 5 to close to prevent the discharge of stored runoff water from the infiltration arrangement 2 to the arrangement for draining runoff water from the surrounding ground 3. The electronic controller 7 transmits instructions to the regulation arrangement 5 to remain in a closed configuration. As illustrated in figure 4, when the regulation arrangement 5 is in a closed configuration, stored runoff water will infiltrate from the infiltration arrangement 2 in to the surrounding ground as illustrated by arrows 15 but will be prevented from discharging from the infiltration arrangement 2 into the arrangement for draining runoff water from the surrounding ground 3.

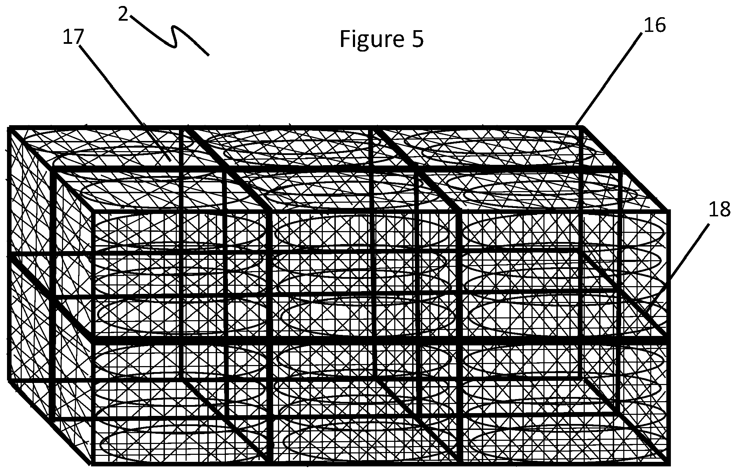

Stored runoff water will infiltrate from the infiltration arrangement 2 via openings 17 (shown in figure 5).

In use, discharge and infiltration of runoff water from an infiltration arrangement 2 can be optimized by installing a control arrangement 4 on the infiltration arrangement 2. The infiltration arrangement being configured to enable infiltration of runoff water into the surrounding ground and being in fluid communication with an arrangement for draining runoff water from the surrounding ground 3. In use, the control arrangement 4 regulates discharge of runoff water from the infiltration arrangement into the arrangement for draining runoff water from the surrounding ground 3. In use, the control arrangement 4 receives weather forecast data and data defining the runoff water level in the infiltration arrangement 2. Then, the control arrangement operates to optimize discharge and infiltration of runoff water from the infiltration arrangement based on that weather forecast data and data defining the runoff water level in the infiltration arrangement 2.

In use, an opening in the ground is provided. The opening in the ground houses the infiltration arrangement 2. The opening in the ground is shaped and sized so that it houses the infiltration arrangement 2 below ground level. Then, a filter arrangement is provided. The filter arrangement is installed in the opening so that the filter arrangement covers the base and sides of the opening and a portion of the filter arrangement extends out of the opening. In this embodiment, the filter arrangement is a geotextile membrane. However, any suitable filter arrangement may be provided. Next, the infiltration arrangement 2 is placed into the opening in the ground. If required, modules of the infiltration arrangement 2 are fixed together. In this embodiment, the infiltration arrangement 2 is one piece. The infiltration arrangement 2 is installed in the opening so that it is in fluid communication with the arrangement for draining runoff water from the surrounding ground 3. Next, the infiltration arrangement 2 is covered with the filter arrangement. The filter arrangement is wrapped around the infiltration arrangement 2 with the portion of the filter arrangement covering the sides of the opening and extending out of the opening. The filter arrangement is wrapped around the infiltration arrangement 2 with the portion of the filter arrangement covering the sides of the opening and extending out of the opening so that opposite ends of the filter arrangement overlap. The filter arrangement is wrapped around the infiltration arrangement 2 with the portion of the filter arrangement covering the sides of the opening and extending out of the opening so that every portion of the infiltration arrangement 2 is covered by the filter arrangement. This prevents any soil or other debris from entering the infiltration arrangement. The filter arrangement is sealed so that the overlapping position of the ends of the filter arrangement remains intact. This prevents the filter arrangement from unwrapping. Next, the opening is filled so that the infiltration arrangement is not visible, and the ground is free from holes or dips.

In use, of the control arrangement 4 transmits instructions to bring a regulation arrangement 5 into a closed position to stop runoff water being discharged into the arrangement for draining runoff water from the surrounding ground 3. Next, the control arrangement 4 receives weather forecast data via a communication arrangement 8. The communication arrangement 8 analyses that weather forecast data. The communication arrangement 8 predicts a likely runoff water volume from any upcoming precipitation event. The communication arrangement 8 predicts a safe level 9 of runoff water that can be in the infiltration arrangement 2 prior to an upcoming precipitation event. Then, the communication arrangement 8 transmits that safe level 9 to an electronic controller 7. The communication arrangement 8 automatically transmits the safe level 9 to the electronic controller 7. Next, the control arrangement 4 detects a current level 21 of runoff water in the infiltration arrangement 2 via at least one level sensor 6. Then, the at least one level sensor 6 transmits that current level 21 of runoff water to the electronic controller 7. The at least one level sensor 6 automatically transmits that current level 21 of runoff water to the electronic controller 7.

In use, the electronic controller 7 determines whether the current level 21 of runoff water in the infiltration arrangement 2 is above the safe level 9 of runoff water that can be in the infiltration arrangement 2 prior to an upcoming precipitation event.

In use, the electronic controller transmits instructions to the regulation arrangement 5 to maintain a closed position if the current level 21 of runoff water in the infiltration arrangement 2 is at or below the safe level 9.

In use, the electronic controller 7 transmits instructions to the regulation arrangement 5 to open and/or close at predetermined intervals to enable gradual discharge of runoff water into the means for draining runoff water from the surrounding ground prior to an upcoming precipitation event when the current level 21 of runoff water in the infiltration means is above the safe level 9.

In use, the electronic controller 7 automatically transmits instructions to the regulation arrangement 5 to open and/or close at predetermined intervals to enable gradual discharge of runoff water into the arrangement for draining runoff water from the surrounding ground 3 prior to an upcoming precipitation event when the current level 21 of runoff water in the infiltration means is above the safe level 9.

## Claims

1. An arrangement capable of optimizing discharge and infiltration of runoff water, the arrangement comprising an infiltration means to enable infiltration of stored runoff water back into the surrounding ground, **characterized in that** the infiltration means is configurable to be in fluid communication with a means for draining runoff water from the surrounding ground.

2. An arrangement according to claim 1 wherein the arrangement comprises a control means for regulating discharge of stored runoff water into the means for draining runoff water from the surrounding ground.

3. An arrangement according to any one of the preceding claims wherein the arrangement comprises a communication means capable of receiving weather forecast data.

4. An arrangement according to any one of the preceding claims wherein the arrangement is configurable to receive data defining the water level in the infiltration means.

5. An arrangement according to claims 2 to 4 wherein the arrangement is configurable to operate the control means based on weather forecast data and/or the water level data.

6. An arrangement according to any one of the preceding claims wherein the arrangement comprises a regulation means to enable or disable passage of stored runoff water out of the infiltration means for discharge into the means for draining runoff water from the surrounding ground.

7. An arrangement according to any one of the preceding claims wherein the arrangement comprises at least one level sensor to detect the level of stored runoff water in the infiltration means.

8. An arrangement according to claim 6 or claim 7 when dependent on claim 6 wherein the arrangement comprises an electronic controller to control the regulation means.

9. An arrangement according to claim 3 wherein the communication means is configurable to predict a safe level of runoff water that can be stored in the infiltration means required prior to an upcoming precipitation event.

10. An arrangement according to any one of the preceding claims wherein the arrangement is battery powered, mains powered, hydraulically powered, solar powered and/or powered by a combination of these and/or powered by any other suitable means.

11. An arrangement according to any one of claim 3 and claims 6-8 wherein the communication means, electronic controller, regulation means and at least one level sensor is configurable to communicate with at least one of the other.

12. An arrangement according to claim 11 wherein the communication means, electronic controller, regulation means and at least one level sensor is configurable to communicate with at least one of the other via a wired network and/or via a wireless network.

13. An arrangement according to claim 6 wherein the regulation means is configurable to open and/or close.

14. A control means for an infiltration means, the infiltration means being configured to enable infiltration of stored runoff water into the surrounding ground and being in fluid communication with a means for draining runoff water from the surrounding ground, the control means comprising a regulation means to enable or disable passage of stored runoff water out of the infiltration means for discharge into the means for draining runoff water from the surrounding ground, wherein the control means is configurable to automatically open and/or close the regulation means in order to regulate the discharge of stored runoff water into the means for draining runoff water from the surrounding ground, based on a predicted likely volume of runoff water from an upcoming precipitation event communicated to the control means and a current volume of runoff water being stored in the infiltration means communicated to the control means.

15. A method for optimizing discharge and infiltration of runoff water, comprising the steps of installing a control means onto an infiltration means, the infiltration means being configured to enable infiltration of runoff water into the surrounding ground and being in fluid communication with a means for draining runoff water from the surrounding ground, the control means being capable of regulating discharge of runoff water into the means for draining runoff water from the surrounding ground, the control means further being capable of receiving weather forecast data and data defining the water level in the infiltration means, the method comprising the step of operating the control means based on that weather forecast data.
